# FASCICULE DE BREVET EUROPEEN

(11) **EP 2 834 131 B1**
(45) Date de publication et mention de la délivrance du brevet: **13.07.2016**
(21) Numéro de dépôt: 13719926.1
(22) Date de dépôt: 26.03.2013
(51) Int. Cl.: B62D 5/04

(54) **PROCEDE DE COMMANDE DU MOTEUR DE DIRECTION ASSISTEE ELECTRIQUE, DISPOSITIF CORRESPONDANT, DIRECTION ASSISTEE ET VEHICULE COMPRENANT LEDIT DISPOSITIF**
VERFAHREN ZUR STEUERUNG EINER ELEKTRISCHEN SERVOLENKMOTORS, ENTSPRECHENDE VORRICHTUNG, SERVOLENKUNG UND FAHRZEUG MIT DIESER VORRICHTUNG
METHOD FOR CONTROLLING AN ELECTRIC POWER STEERING MOTOR, CORRESPONDING DEVICE, POWER STEERING AND VEHICLE COMPRISING SAID DEVICE

(30) Priorité: 03.04.2012 FR 1253035
(43) Date de publication de la demande: 11.02.2015
(73) Titulaire: Renault S.A.S., 92100 Boulogne-Billancourt (FR)
(72) Inventeur: PUGSLEY, Gareth, F-78390 Bois d'Arcy (FR)
(86) Numéro de dépôt international: PCT/FR2013/050642
(87) Numéro de publication internationale: WO 2013/150217

(56) Documents cités:
- WO-A1-2007/045973
- DE-A1- 10 050 377
- US-A1- 2001 027 895

## Description

La présente invention concerne, de manière générale, les véhicules automobiles équipés d'une direction assistée de type électrique. L'invention se rapporte plus particulièrement à un procédé de commande du moteur électrique d'une telle direction assistée et à un dispositif de commande correspondant.

Dans une direction assistée de type électrique, un moteur électrique est utilisé pour appliquer un couple ou une force d'assistance sur la colonne ou le pignon de direction ou la crémaillère du véhicule, de manière à assister le mouvement appliqué sur le volant du véhicule par le conducteur lors d'opérations de manoeuvre ou de changement de direction. Ce couple d'assistance vient s'additionner au couple appliqué sur le volant par le conducteur.

Sur les véhicules équipés du système dit "Stop and Start", le redémarrage du moteur thermique du véhicule après une phase d'arrêt crée une sous-tension transitoire sur le réseau électrique du véhicule. La tension du réseau électrique étant trop faible pour fournir une puissance suffisante au moteur électrique de la direction assistée, l'assistance électrique est généralement coupée pendant cette phase. Cette coupure de l'assistance intervient brusquement et est relativement désagréable pour le conducteur car il ressent alors une perte soudaine d'assistance.

La publication WO 2007/045973-A1 divulgue un procédé de commande de moteur de direction assistée comprenant une mesure de la tension du réseau comparée à un seuil de tension prédéterminée et suivie d'une coupure de l'assistance de direction en cas de tension inférieure audit seuil.

L'invention s'inscrit donc dans une démarche d'amélioration de la commande du moteur de la direction assistée électrique lorsqu'une baisse de la tension d'alimentation intervient.

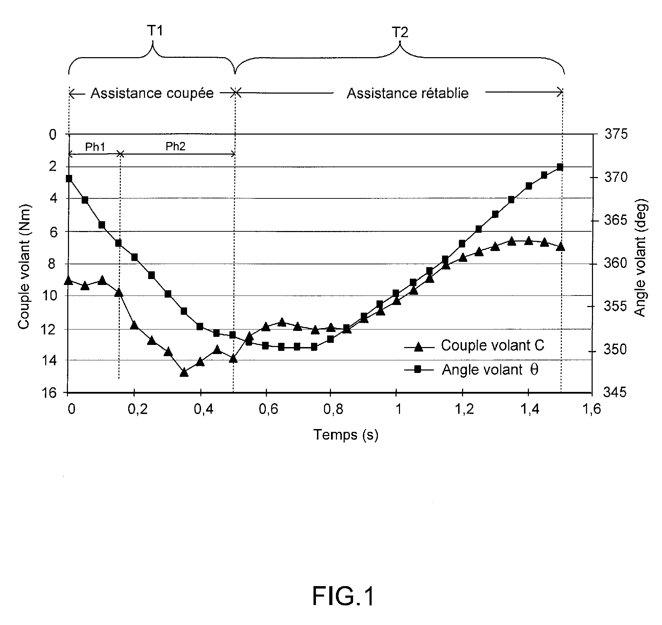

La figure 1 illustre le comportement de l'angle volant et du couple volant lors de la coupure de la direction assistée électrique. Cette figure montre plus exactement deux courbes, l'une représentant la variation temporelle de l'angle volant θ et l'autre représentant la variation temporelle du couple volant C pendant une phase temporelle, référencée T1, durant laquelle l'assistance électrique du véhicule est coupée puis pendant une phase, référencée T2, durant laquelle l'assistance électrique est rétablie. L'angle volant désigne l'angle de rotation du volant et le couple volant désigne le couple ressenti par le conducteur lorsqu'il souhaite tourner le volant. La phase T1 correspond par exemple à une phase de redémarrage du moteur thermique du véhicule. Dans la figure 1, cette phase dure environ 500 ms et est divisée en deux phases élémentaires successives:
- pendant une première phase élémentaire Ph1 ayant une durée d'environ 160 ms, le couple volant C est sensiblement constant, de l'ordre de 9 N.m, et l'angle volant θ varie sensiblement linéairement; le conducteur ressent une faible rotation du volant mais ne ressent aucune modification du couple; cette absence de variation du couple volant pendant la phase Ph1 est liée à la chaîne cinématique de la direction du véhicule; et
- pendant une phase élémentaire Ph2 subséquente à la phase Ph1, l'angle volant continue à varier sensiblement linéairement et le couple volant commence à varier; le conducteur ressent alors la même sensation de rotation du volant mais le volant devient de plus en plus résistant à la rotation.

Ensuite, lorsque l'assistance est rétablie (phase T2), le couple volant et l'angle volant reviennent progressivement à leurs valeurs initiales (valeurs antérieures à la coupure de direction assistée).

Ces variations soudaines du couple volant et de l'angle volant lors de la coupure de direction assistée sont non seulement désagréables pour le conducteur comme mentionné précédemment (sensation de perte d'assistance) mais peuvent être dangereuses. Si le volant tourne brusquement d'une dizaine de degrés ou plus, les mains du conducteur sont soudainement déplacées par le volant et peuvent entrainer violemment le corps du conducteur contre le volant si ce dernier ne lâche pas le volant ou, s'il le lâche, les doigts du conducteur, notamment les pouces, peuvent rentrer violemment en contact avec la barre du volant reliant la partie centrale du volant à la jante.

Pour éviter cela, on propose selon l'invention d'effectuer les étapes suivantes lorsque la tension d'alimentation de la direction assistée passe en dessous d'un seuil de tension prédéterminée: on coupe dans un premier temps la direction assistée et, si l'angle volant et/ou le couple volant varie(nt) de manière importante pendant la coupure de direction assistée, on active dans un deuxième temps le frein moteur du moteur électrique de manière à freiner voire bloquer la rotation du volant.

Plus précisément, l'invention concerne un procédé de commande du moteur électrique d'une direction assistée électrique d'un véhicule automobile comportant notamment un volant apte être tourné par un conducteur pour orienter les roues directrices du véhicule, ledit moteur électrique étant alimenté par une tension dite d'alimentation et apte à appliquer une force d'assistance à un élément, tel que la colonne de direction, le pignon de direction ou la crémaillère, de la direction assistée, ledit procédé comprenant les étapes suivantes
- comparaison de la tension d'alimentation avec un seuil de tension prédéterminé à chaque instant,
- coupure de l'assistance par le moteur électrique lorsque la tension d'alimentation est inférieure au seuil de tension, et
- réactivation de l'assistance lorsque la tension d'alimentation redevient supérieure ou égale au seuil de tension,
caractérisé en ce qu'il comporte en outre les étapes suivantes:
- on mesure, pendant la phase de coupure de l'assistance, l'angle volant et/ou du couple volant et on compare la variation de l'angle volant pendant ladite phase de coupure de l'assistance avec un seuil de variation d'angle prédéterminé et/ou de la variation du couple volant pendant la phase de coupure de l'assistance avec un seuil de variation de couple, et
- lorsque ladite variation de l'angle volant est supérieure audit seuil de variation d'angle et/ou lorsque ladite variation du couple volant est supérieure audit seuil de variation de couple, on active le frein moteur du moteur électrique pendant une phase dite de frein moteur consécutive à la phase de coupure d'assistance.

Ainsi, selon l'invention, pendant la phase de sous-alimentation de la direction assistée, on n'active le frein moteur du moteur électrique que si la variation de l'angle volant et/ou la variation du couple volant dépasse(nt) un seuil prédéterminé, par exemple 10 degrés pour l'angle volant et 5 N.m pour le couple volant

Selon un mode de réalisation, l'intensité du freinage pendant la phase de frein moteur est fonction de couple volant et/ou de l'angle volant mesuré(s).

Selon un mode de réalisation, l'intensité du freinage pendant la phase de frein moteur augmente progressivement selon une loi prédéterminée pour éviter une augmentation trop soudaine du couple volant.

Selon un mode de réalisation, la phase de frein moteur présente une durée maximale et, lorsque ladite durée maximale est atteinte, on coupe de nouveau l'assistance afin de protéger le conducteur et ne pas bloquer définitivement le volant.

Selon un mode de réalisation particulier, la durée maximale de la phase de frein moteur est comprise entre 50 ms et 500 ms, de préférence entre 100 ms et 200 ms.

L'invention concerne également un dispositif de commande du moteur électrique d'une direction assistée électrique d'un véhicule automobile comportant notamment un volant apte être tourné par un conducteur pour orienter les roues directrices du véhicule, ledit moteur électrique étant alimenté par une tension dite d'alimentation et apte à appliquer une force d'assistance à un élément de la direction assistée, caractérisé en ce qu'il comprend:
- un module de contrôle moteur pour commander ledit moteur électrique,
- un capteur de couple pour mesurer le couple, dit couple volant, exercé sur le volant,
- un capteur d'angle pour mesurer l'angle du volant par rapport à un angle de référence,
- un détecteur de sous-tension apte à détecter lorsque la tension d'alimentation est inférieure à une tension seuil prédéterminée,
en ce que le module de contrôle moteur coupe l'assistance lorsque la tension d'alimentation est inférieure à un seuil de tension prédéterminé et réactive l'assistance lorsque la tension d'alimentation redevient supérieure ou égale au seuil de tension,
et en ce que le module de contrôle moteur active le frein moteur du moteur électrique lorsque la variation de l'angle volant pendant la phase de coupure de l'assistance est supérieure à un seuil de variation d'angle prédéterminé et/ou lorsque la variation du couple volant pendant la phase de coupure de l'assistance est supérieure à un seuil de variation de couple prédéterminé.

Selon un mode de réalisation, le module de contrôle moteur détermine l'intensité du freinage moteur en fonction du couple volant et/ou de l'angle volant mesuré(s).

Selon un mode de réalisation, pendant la phase de frein moteur, le module de contrôle moteur commande le moteur de manière ce que l'intensité du freinage augmente progressivement selon une loi prédéterminée.

L'invention concerne également une direction assistée électrique pour véhicule automobile comprenant un moteur électrique apte à appliquer une force d'assistance à un élément de la direction assistée et un dispositif de commande du moteur électrique, caractérisée en ce que le dispositif de commande du moteur électrique est comme défini précédemment.

Enfin, l'invention concerne également un véhicule automobile comprenant un volant et une direction assistée électrique comme définie précédemment.

L'invention sera mieux comprise, et d'autres buts, détails, caractéristiques et avantages apparaîtront plus clairement au cours de la description explicative détaillée qui va suivre, en se référant ci-dessous aux dessins annexés, lesquels représentent:
- la figure 1, déjà décrite, des courbes illustrant l'évolution temporelle de l'angle volant et du couple volant pendant une phase de coupure de la direction assistée puis une phase de rétablissement de la direction assistée,
- la figure 2, un organigramme illustrant les différentes étapes du procédé de l'invention; et,
- la figure 3, un schéma illustrant un dispositif de commande du moteur d'une direction assistée électrique conforme à l'invention; et
- la figure 4, des courbes illustrant l'évolution du couple volant et de l'angle volant avec l'invention et sans l'invention.

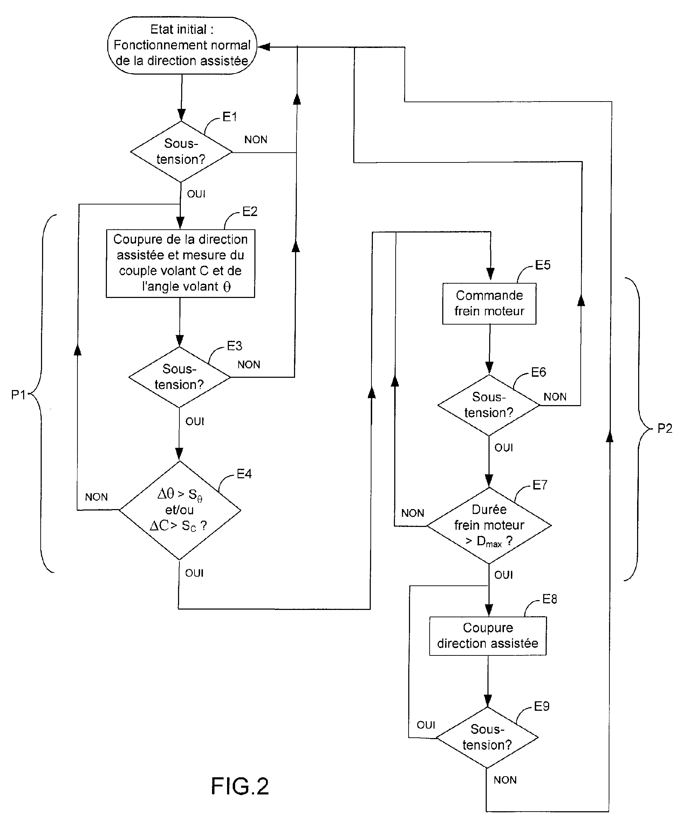

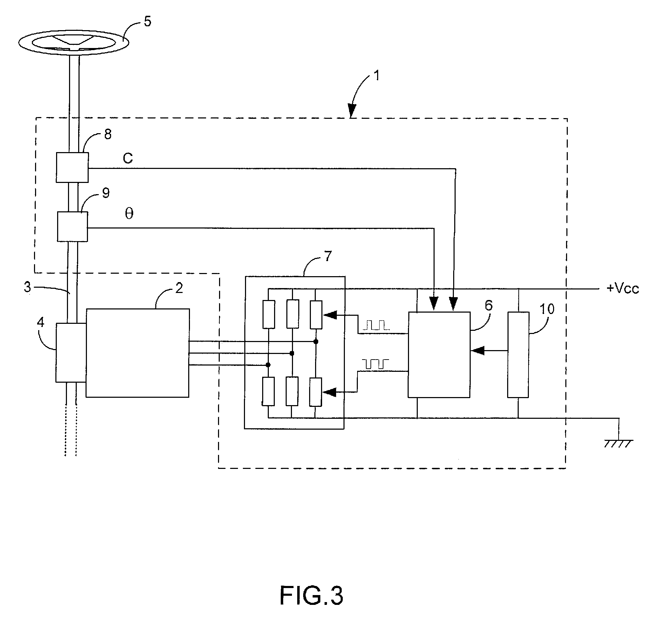

L'invention est décrite ci-après conjointement en référence aux figures 2 et 3. La figure 2 montre les étapes mises en oeuvre dans le procédé de l'invention et la figure 3 montre un dispositif permettant de mettre en oeuvre ces étapes.

Le dispositif de commande 1 conforme à l'invention est destiné à commander un moteur électrique 2 de la direction assistée d'un véhicule. Le moteur électrique a pour fonction d'appliquer une force d'assistance sur la colonne de direction 3 de la direction assistée via un boitier de réduction 4. Cette force vient s'additionner à celle appliquée sur le volant 5 par le conducteur et transmise à la colonne de direction.

Le dispositif de commande 1 comprend un module de contrôle moteur constitué d'une unité de calcul 6 et d'un étage de puissance 7 connecté au moteur, un capteur de couple 8 et un capteur d'angle 9 montés sur la colonne de direction pour mesurer respectivement le couple volant C et l'angle volant θ, et un détecteur de sous-tension 10 pour détecter lorsque la tension d'alimentation du moteur électrique passe en dessous d'un seuil de tension prédéfini, par exemple en dessous 8 volts pour une tension d'alimentation normale de 12,5 volts. Le moteur électrique 2 et le module de contrôle moteur sont alimentés par une tension d'alimentation Vcc. Dans le dispositif de la figure 3, le moteur 2 est un moteur triphasé. A cet effet, l'étage de puissance 7 comporte 6 transistors de puissance montés en pont, à savoir 3 transistors de puissance pour la partie haute du pont et 3 transistors de puissance pour la partie basse du pont. Une telle structure en pont de l'étage de puissance est bien connue de l'homme du métier. Les transistors de puissance sont commandés par des signaux PWM (pour Pulse Width Modulation en langue anglaise) délivrés par l'unité de calcul 6. Lorsque la direction fonctionne normalement, c'est-à-dire lorsque la tension d'alimentation Vcc est supérieure au seuil prédéfini, l'unité de calcul délivre des signaux PWM qui sont fonction de l'angle volant et de la vitesse du véhicule fournie par un capteur de vitesse non représenté sur la figure 3.

Selon l'invention, dès qu'une sous-tension est détectée par le détecteur de sous tension 10 lors d'une étape E1 de comparaison de la tension d'alimentation Vcc avec le seuil de tension prédéfini, on coupe la direction assistée (étape E2). Pendant la phase de coupure de l'assistance, notée P1, l'unité de calcul 6 génère des signaux PWM ayant des impulsions de largeur nulle (aucune impulsion). Les transistors de l'étage de puissance sont alors bloqués et le moteur n'est plus commandé.

Pendant la phase de coupure de l'assistance (phase P1), on mesure à chaque instant l'angle volant et/ou le couple volant (étape E2). On compare la tension d'alimentation Vcc avec le seuil de tension prédéfini (étape E3) et on compare aussi la variation Δθ de l'angle volant pendant cette phase P1 avec une valeur seuil Se et/ou la variation ΔC du couple volant pendant cette phase avec une valeur seuil S_{C} (étape E4). Si la tension d'alimentation Vcc redevient supérieure ou égale au seuil de tension prédéfini avant que la variation Δθ n'atteigne la valeur seuil Se et/ou que la variation ΔC n'atteigne la valeur seuil S_{C}., on réactive l'assistance (état initial).

Les variations Δθ et ΔC sont déterminées par l'unité de calcul 6. Les seuils Se et S_{C} sont prédéfinis et mémorisés dans l'unité de calcul. Le seuil Se est par exemple égal à 10° et le seuil S_{C} est par exemple égal à 5 N.m.

Si la variation Δθ est supérieure à Se et/ou la variation ΔC est supérieure à S_{C}, on commande le frein moteur du moteur électrique (étape E5). A cet effet, l'unité de calcul 6 délivre des signaux PWM identiques ayant un rapport cyclique R non nul sur les trois transistors de la partie haute de l'étage de puissance 7 et un signal PWM ayant un rapport cyclique nul sur les trois transistors de la partie basse de l'étage de puissance. Le rapport cyclique R des transistors de la partie haute de l'étage de puissance est compris entre 1% et 100%. Il est proportionnel à l'intensité du freinage appliqué pendant la phase de frein moteur. Selon un mode de réalisation, il est calculé en fonction de l'angle volant θ et du couple volant C. Selon un autre mode de réalisation, le rapport R augmente progressivement au cours de la phase de frein moteur selon une loi prédéterminée pour que le blocage de la direction soit progressif. Bien entendu, il est aussi possible d'appliquer le signal PWM de rapport cyclique non nul sur les transistors de la partie basse de l'étage de puissance et le signal PWM de rapport cyclique nul sur les transistors de la partie haute.

Pendant la phase de frein moteur, notée P2, on compare la tension d'alimentation Vcc avec le seuil de tension prédéfini (étape E6) et on compare aussi la durée de la phase P2 avec une durée maximale Dₘₐₓ prédéfinie (étape E7). Cette durée maximale est comprise entre 50 ms et 500 ms, de préférence entre 100 ms et 200 ms. Si la durée de la phase P2 est supérieure à Dₘₐₓ, on coupe l'assistance (étape E8). Cette étape a pour but d'éviter que le blocage de la direction ne perdure trop longtemps pour des raisons de sécurité. On maintient alors la coupure d'assistance jusqu'à ce la tension d'alimentation redevienne supérieure au seuil de tension prédéfini (étape E9).

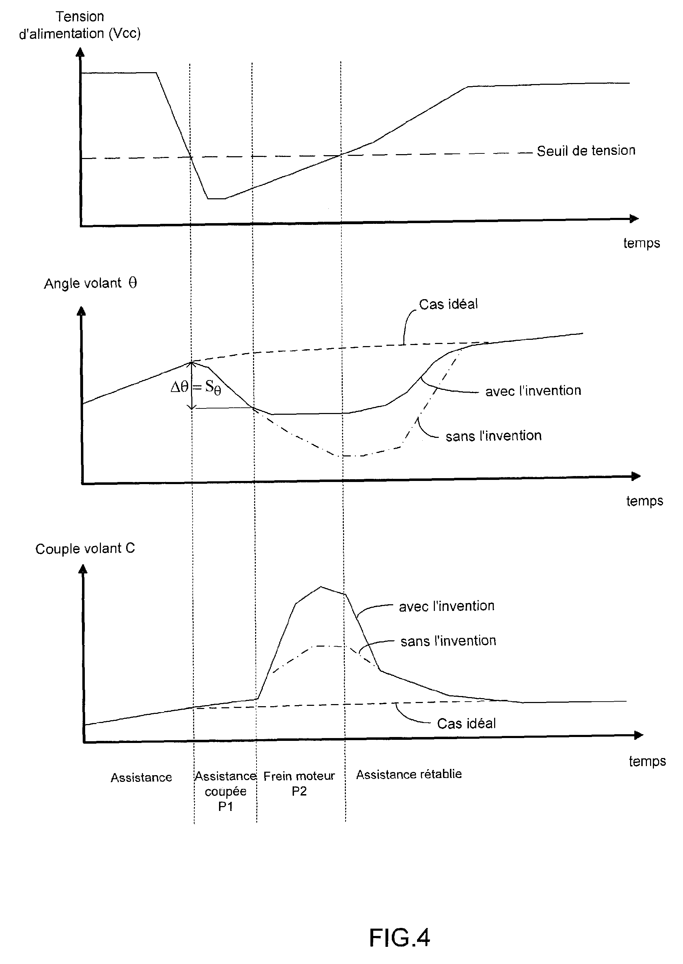

La figure 4 illustre par des courbes l'évolution de l'angle volant θ et du couple volant C en fonction de l'évolution de la tension d'alimentation Vcc du moteur électrique de la direction assistée pour trois cas:
- cas où le procédé de l'invention est mis en oeuvre;
- cas où le procédé de l'invention n'est pas mis en oeuvre et où on se contente de couper l'assistance lorsque la tension d'alimentation Vcc est en-dessous du seuil de tension;
- cas idéal (pas de sous-tension et donc pas de coupure de l'assistance).

Selon l'invention, l'assistance est coupée dès que la tension d'alimentation passe en dessous du seuil de tension (par ex. 8,5 volts). Dans cette figure, en ce qui concerne le procédé de l'invention, le frein moteur est activé lorsque la variation Δθ de l'angle volant pendant la phase de coupure d'assistance atteint sa valeur seuil et cela quelle que soit la variation du couple ΔC pendant cette phase. Comme on peut le voir sur cette figure, l'invention permet de maintenir constant l'angle volant θ lorsqu'il devient trop important et de bloquer ensuite la direction jusqu'à ce que la tension d'alimentation repasse au-dessus du seuil de tension.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

L'invention a été plus particulièrement décrite dans le cadre d'une direction assistée électrique de colonne de direction. Bien entendu, elle est applicable à une direction assistée de pignon de direction ou de crémaillère.

Par ailleurs, le moteur électrique de la direction assistée peut fonctionner avec deux phases au lieu de trois. Dans ce cas, l'étage de puissance ne comporte que 4 transistors montés selon un pont en H et l'unité de calcul ne délivre alors que 4 signaux de commande.

## Revendications

1. Procédé de commande du moteur électrique d'une direction assistée électrique d'un véhicule automobile comportant notamment un volant apte être tourné par un conducteur pour orienter les roues directrices du véhicule, ledit moteur électrique étant alimenté par une tension dite d'alimentation et apte à appliquer une force d'assistance à un élément de la direction assistée, ledit procédé comprenant les étapes suivantes
- comparaison (E1) de la tension d'alimentation avec un seuil de tension prédéterminé à chaque instant,
- coupure de l'assistance (E2) lorsque la tension d'alimentation est inférieure au seuil de tension, et
- réactivation de l'assistance lorsque la tension d'alimentation redevient supérieure ou égale au seuil de tension,
**caractérisé en ce qu'**il comporte en outre les étapes suivantes:
- on mesure (E2), pendant la phase de coupure de l'assistance (P1), l'angle volant (θ) et/ou du couple volant (C) et on compare (E4) la variation (Δθ) de l'angle volant pendant ladite phase de coupure de l'assistance avec un seuil de variation d'angle prédéterminé (Sθ) et/ou la variation (ΔC) du couple volant pendant ladite phase de coupure de l'assistance avec un seuil de variation de couple (S_{C}), et
- lorsque ladite variation (Δθ) de l'angle volant est supérieure audit seuil de variation d'angle et/ou lorsque ladite variation (ΔC) du couple volant est supérieure audit seuil de variation de couple, on active le frein moteur (E5) du moteur électrique pendant une phase dite de frein moteur (P2) consécutive à la phase de coupure d'assistance (P1).

2. Procédé selon la revendication 1, **caractérisé en ce que** l'intensité du freinage pendant la phase de frein moteur (P2) est fonction du couple volant et/ou de l'angle volant mesuré(s).

3. Procédé selon la revendication 1, **caractérisé en ce que** l'intensité du freinage pendant la phase de frein moteur (P2) augmente progressivement selon une loi prédéterminée.

4. Procédé selon l'une quelconque des revendications précédentes, **caractérisé en ce que** la phase de frein moteur présente une durée maximale (Dₘₐₓ) et **en ce que**, lorsque ladite durée maximale est atteinte, on coupe l'assistance (E8).

5. Procédé selon la revendication 4, **caractérisé en ce que** la durée maximale de la phase de frein moteur est comprise entre 50 ms et 500 ms, de préférence entre 100 ms et 200 ms.

6. Dispositif (1) de commande du moteur électrique (2) d'une direction assistée électrique d'un véhicule automobile comportant notamment un volant (5) apte être tourné par un conducteur pour orienter les roues directrices du véhicule, ledit moteur électrique étant alimenté par une tension dite d'alimentation (Vcc) et apte à appliquer une force d'assistance à un élément de la direction assistée, **caractérisé en ce qu'**il comprend:
- un module de contrôle moteur (6,7) pour commander ledit moteur électrique,
- un capteur de couple (9) pour mesurer le couple, dit couple volant (C), exercé sur le volant,
- un capteur d'angle (8) pour mesurer l'angle (θ) du volant par rapport à un angle de référence,
- un détecteur de sous-tension (10) apte à détecter lorsque la tension d'alimentation est inférieure à une tension seuil prédéterminée,
**en ce que** le module de contrôle moteur (6,7) coupe l'assistance lorsque la tension d'alimentation est inférieure à un seuil de tension prédéterminé et réactive l'assistance lorsque la tension d'alimentation redevient supérieure ou égale au seuil de tension,
et **en ce que** le module de contrôle moteur active le frein moteur du moteur électrique lorsque la variation (Δθ) de l'angle volant pendant la phase de coupure de l'assistance est supérieure à un seuil de variation d'angle prédéterminé et/ou lorsque la variation (ΔC) du couple volant pendant la phase de coupure de l'assistance est supérieure à un seuil de variation de couple prédéterminé.

7. Dispositif selon la revendication 6, **caractérisé en ce que** le module de contrôle moteur détermine l'intensité du freinage moteur en fonction du couple volant et/ou de l'angle volant mesuré(s).

8. Dispositif selon la revendication 6, **caractérisé en ce que**, pendant la phase de frein moteur, le module de contrôle moteur commande le moteur de manière ce que l'intensité du freinage augmente progressivement selon une loi prédéterminée.

9. Direction assistée électrique pour véhicule automobile comprenant un moteur électrique (2) apte à appliquer une force d'assistance à un élément de la direction assistée et un dispositif de commande (1) du moteur électrique, **caractérisée en ce que** le dispositif de commande du moteur électrique est conforme à l'une des revendications 6 à 8.

10. Véhicule automobile comprenant un volant et une direction assistée électrique selon la revendication 9.

## Patentansprüche

1. Verfahren zur Steuerung des Elektromotors einer elektrischen Servolenkung eines Kraftfahrzeugs, das insbesondere ein Lenkrad aufweist, das geeignet ist, von einem Fahrzeugführer gedreht zu werden, um die gelenkten Räder des Fahrzeugs auszurichten, wobei der Elektromotor von einer "Speisespannung" genannten Spannung gespeist wird und geeignet ist, eine Hilfskraft auf ein Element der Servolenkung auszuüben, wobei das Verfahren die folgenden Schritte aufweist:
- Vergleich (E1) der Speisespannung mit einem vorgegebenen Spannungsschwellenwert zu jedem Zeitpunkt,
- Ausschalten der Unterstützung (E2), wenn die Speisespannung niedriger als der Spannungsschwellenwert ist, und
- Reaktivierung der Unterstützung, wenn die Speisespannung wieder größer als der oder gleich dem Spannungsschwellenwert wird,
**dadurch gekennzeichnet, dass** es außerdem die folgenden Schritte aufweist:
- man misst (E2), während der Phase des Ausschaltens der Unterstützung (P1), den Lenkradwinkel (θ) und/oder das Lenkraddrehmoment (C), und man vergleicht (E4) die Änderung (Δθ) des Lenkradwinkels während der Phase des Ausschaltens der Unterstützung mit einem vorgegebenen Schwellenwert der Winkeländerung (Sθ) und/oder die Änderung (ΔC) des Lenkraddrehmoments während der Phase des Ausschaltens der Unterstützung mit einem Schwellenwert der Drehmomentänderung (S_{C}), und
- wenn die Änderung (Δθ) des Lenkradwinkels größer als der Schwellenwert der Winkeländerung ist, und/oder wenn die Änderung (ΔC) des Lenkraddrehmoments größer als der Schwellenwert der Drehmomentänderung ist, wird die Motorbremse (E5) des Elektromotors während einer "Motorbremsphase" genannten Phase (P2), die auf die Phase des Ausschaltens der Unterstützung (P1) folgt, aktiviert.

2. Verfahren nach Anspruch 1, **dadurch gekennzeichnet, dass** die Stärke des Bremsens während der Motorbremsphase (P2) von dem gemessenen Lenkraddrehmoment und/oder dem gemessenen Lenkradwinkel abhängig ist.

3. Verfahren nach Anspruch 1, **dadurch gekennzeichnet, dass** sich die Stärke des Bremsens während der Motorbremsphase (P2) gemäß einer vorgegebenen Funktion allmählich erhöht.

4. Verfahren nach einem der vorhergehenden Ansprüche, **dadurch gekennzeichnet, dass** die Motorbremsphase eine maximale Dauer (Dₘₐₓ) aufweist, und dadurch, dass, wenn diese maximale Dauer erreicht ist, die Unterstützung ausgeschaltet wird (E8).

5. Verfahren nach Anspruch 4, **dadurch gekennzeichnet, dass** die maximale Dauer der Motorbremsphase zwischen 50 ms und 500 ms beträgt, vorzugsweise zwischen 100 ms und 200 ms.

6. Vorrichtung (1) zur Steuerung des Elektromotors (2) einer elektrischen Servolenkung eines Kraftfahrzeugs, das insbesondere ein Lenkrad (5) aufweist, das geeignet ist, von einem Fahrzeugführer gedreht zu werden, um die gelenkten Räder des Fahrzeugs auszurichten, wobei der Elektromotor von einer "Speisespannung" genannten Spannung (Vcc) gespeist wird und geeignet ist, eine Hilfskraft auf ein Element der Servolenkung auszuüben, **dadurch gekennzeichnet, dass** sie aufweist:
- ein Motorsteuerungsmodul (6, 7) zum Steuern des Elektromotors,
- einen Drehmomentsensor (9) zum Messen des "Lenkraddrehmoment" genannten Drehmoments (C), das auf das Lenkrad ausgeübt wird,
- einen Winkelsensor (8) zum Messen des Winkels (θ) des Lenkrads bezüglich eines Referenzwinkels,
- einen Unterspannungsdetektor (10), der geeignet ist zu erkennen, wenn die Speisespannung niedriger als eine vorgegebene Schwellenwertspannung ist,
dadurch, dass das Motorsteuerungsmodul (6, 7) die Unterstützung ausschaltet, wenn die Speisespannung niedriger als ein vorgegebener Spannungsschwellenwert ist, und die Unterstützung reaktiviert, wenn die Speisespannung wieder größer als der oder gleich dem Spannungsschwellenwert wird,
und dadurch, dass das Motorsteuerungsmodul die Motorbremse des Elektromotors aktiviert, wenn die Änderung (Δθ) des Lenkradwinkels während der Phase des Ausschaltens der Unterstützung größer als ein vorgegebener Schwellenwert der Winkeländerung ist, und/oder wenn die Änderung (ΔC) des Lenkraddrehmoments während der Phase des Ausschaltens der Unterstützung größer als ein vorgegebener Schwellenwert der Drehmomentänderung ist.

7. Vorrichtung nach Anspruch 6, **dadurch gekennzeichnet, dass** das Motorsteuerungsmodul die Stärke der Motorbremsung in Abhängigkeit von dem gemessenen Lenkraddrehmoment und/oder dem gemessenen Lenkradwinkel bestimmt.

8. Vorrichtung nach Anspruch 6, **dadurch gekennzeichnet, dass** während der Motorbremsphase das Motorsteuerungsmodul den Motor derart steuert, dass sich die Stärke des Bremsens gemäß einer vorgegebenen Funktion allmählich erhöht.

9. Elektrische Servolenkung für ein Kraftfahrzeug, welche einen Elektromotor (2), der geeignet ist, eine Hilfskraft auf ein Element der Servolenkung auszuüben, und eine Vorrichtung zur Steuerung (1) des Elektromotors aufweist, **dadurch gekennzeichnet, dass** die Vorrichtung zur Steuerung des Elektromotors einem der Ansprüche 6 bis 8 entspricht.

10. Kraftfahrzeug, welches ein Lenkrad und eine elektrische Servolenkung nach Anspruch 9 aufweist.

## Claims

1. Method for controlling the electric motor of an electric power steering of a motor vehicle notably comprising a steering wheel that a driver can turn in order to orient the steered wheels of the vehicle, the said electric motor being supplied with a voltage referred to as the supply voltage and able to apply an assistance force to an element of the power steering, the said method comprising the following steps
- comparing (E1) the supply voltage against a voltage threshold that is predetermined at each moment,
- cutting the assistance (E2) when the supply voltage is below the voltage threshold, and
- reactivating the assistance when the supply voltage becomes higher than or equal to the voltage threshold again,
**characterized in that** it further comprises the following steps:
- measuring (E2), during the phase for which the assistance is cut (P1), the steering wheel angle (θ) and/or the steering wheel torque (C) and comparing (E4) the variation (Δθ) in steering wheel angle during the said phase for which the assistance is cut with a predetermined threshold for variation in angle (Sθ) and/or variation (ΔC) in steering wheel torque during the said phase for which the assistance is cut with a torque variation threshold (S_{C}), and
- when the said variation (Δθ) in steering wheel angle is above the said angle variation threshold and/or when the said variation (ΔC) in steering wheel torque is above the said torque variation threshold, the motor brake (E5) of the electric motor is activated during a phase referred to as the motor brake phase (P2) that follows on from the phase for which assistance is cut (P1).

2. Method according to Claim 1, **characterized in that** the intensity of the braking during the motor brake phase (P2) is a function of the steering wheel torque and/or of the steering wheel angle that is/are measured.

3. Method according to Claim 1, **characterized in that** the intensity of the braking during the motor brake phase (P2) increases progressively according to a predetermined law.

4. Method according to any one of the preceding claims, **characterized in that** the motor brake phase has a maximum duration (Dₘₐₓ) and **in that**, when the said maximum duration is reached, the assistance is cut (E8).

5. Method according to Claim 4, **characterized in that** the maximum duration of the motor brake phase is comprised between 50 ms and 500 ms, preferably between 100 ms and 200 ms.

6. Device (1) for controlling the electric motor (2) of an electric power steering of a motor vehicle notably comprising a steering wheel (5) that a driver can turn in order to orient the steered wheels of the vehicle, the said electric motor being supplied with a voltage referred to as the supply voltage (Vcc) and able to apply an assistance force to an element of the power steering, **characterized in that** it comprises:
- a motor control module (6, 7) for controlling the said electric motor,
- a torque sensor (9) for measuring the torque, referred to as steering wheel torque (C), applied to the steering wheel,
- an angle sensor (8) for measuring the angle (θ) of the steering wheel with respect to a reference angle,
- an undervoltage detector (10) able to detect when the supply voltage is below a predetermined threshold voltage,
and **in that** the motor control module (6, 7) cuts the assistance when the supply voltage is below a predetermined voltage threshold and reactivates the assistance when the supply voltage becomes higher than or equal to the voltage threshold again,
and **in that** the motor control module activates the motor brake of the electric motor when the variation (Δθ) in steering wheel angle during the phase for which assistance is cut is above a predetermined angle variation threshold and/or when the variation (ΔC) in steering wheel torque during the phase for which assistance is cut is above a predetermined torque variation threshold.

7. Device according to Claim 6, **characterized in that** the motor control module determines the intensity of the motor braking according to the steering wheel torque and/or the steering wheel angle that is/are measured.

8. Device according to Claim 6, **characterized in that**, during the motor brake phase, the motor control module controls the motor in such a way that the intensity of the braking increases progressively according to a predetermined law.

9. Electric power steering for a motor vehicle comprising an electric motor (2) able to apply an assistance force to an element of the power steering and a control device (1) for controlling the electric motor, **characterized in that** the electric motor control device is according to any one of Claims 6 to 8.

10. Motor vehicle comprising a steering wheel and an electric power steering according to Claim 9.
